# EUROPEAN PATENT APPLICATION

(11) **EP 4 679 845 A1**
(43) Date of publication of application: **14.01.2026**
(21) Application number: 24306167.8
(22) Date of filing: 11.07.2024
(51) Int. Cl.: H04N 21/81

(54) **SIGNALING AVATAR EYE AND EYELIDS HANDLING IN SCENE DESCRIPTION**

(71) Applicant: InterDigital CE Patent Holdings, SAS, 75017 Paris (FR)
(72) Inventor: GOSSELIN, Philippe Henri, 35235 THORIGNE-FOUILLARD (FR); COVA REGATEIRO, João Pedro, 35220 CHATEAUBOURG (FR); LE CLERC, Francois, 35590 L'HERMITAGE (FR)
(74) Representative: Interdigital

(57) **Abstract**

Methods, apparatus and data stream are provided for rendering a 3D scene comprising avatars having eyes associated with an eyelid The method comprises obtaining a scene description of the 3D scene comprising a list of eyelid descriptions. Every eyelid description comprises a reference to an eye node, a transform type for the eye node with associated transform parameters, and an eyelid handling type with associated handling parameters. Then the 3D scene is prepared for rendering according to the scene description. For each eye node of the avatars, if the avatar has changed, the eye and the eyelid may be transformed according to the eyelid description corresponding to the eye node. An eye transform process may be applied according to the transform type and transform parameters; and an eyelid transform process may be applied according to the eyelid handling type and handling parameters. Then, the 3D scene is rendered.

## Description

### 1. Technical Field

The present principles generally relate to the domain of encoding transmitting and decoding for 3D scene description. In particular, the present principles relate to the encoding, transmitting and decoding of the components and the parameters required to ensure that eyes and eyelids remains correct even if the avatar shape is changed, for instance using morph targets.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Current Scene Description (SD) formats (like MPEG-I Scene Description) allow the definition of an avatar model. Thanks to these features, rendering applications can know which mesh is an avatar, and use it as such. For instance, if the avatar is a usual human body mesh, an application can place it in a scene, and let the user move it in the virtual 3D scene. encoded as a separated mesh or primitive, allowing their animation (like rotations). Without any change on the head mesh, the animation of eye meshes are, most of the time, without issues. However, if something changes the head mesh, like the use of a morph target, the eye sockets can change. In these cases, the eye meshes may be not well placed into the eye sockets and may overlap the eyelids.

Thus, there is a lack of a solution for encoding and transmitting the components and the parameters required to ensure that the renderer correctly place eyes and eyelids when the avatar shape is changed, for instance using morph targets.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The present principles relate to a method for rendering a 3D scene comprising one or more avatars having one or more eyes associated with an eyelid The method comprises obtaining a scene description of the 3D scene comprising a list of eyelid descriptions. Every eyelid description comprises a reference to an eye node, a transform type for the eye node with associated transform parameters, and an eyelid handling type with associated handling parameters. Then the 3D scene is prepared for rendering according to the scene description. In addition, for each eye node of the one or more avatars, if the avatar has changed, the eye and the eyelid may be transformed according to the eyelid description corresponding to the eye node. An eye transform process may be applied according to the transform type and transform parameters; and an eyelid transform process may be applied according to the eyelid handling type and handling parameters. Then, the transformed 3D scene is rendered.

In an embodiment, the transform type of an eyelid description is of a first transform type, herein called "simple", and wherein the eye is transformed as a function of a corrective scale factor and corrective translation for the eye. In a variant, the transform type of an eyelid description is of a second transform type, herein called "animation", and wherein the eye is transformed as a function of an animation based on a weight of a morph target. In another variant, the transform type of an eyelid description is of a third transform type, herein called "none", and wherein the eye is kept unchanged.

In another embodiment, the eyelid handling type of a first handling type, herein called "front". A front direction is indicated in the handling parameters, and the method comprises transforming a mesh of the eyelid by moving vertices of the mesh in the front direction. In a variant, wherein the eyelid handling type of a second handling type, herein called "normal", and the mesh of the eyelid is transformed by moving vertices of the mesh according to an outward normal of an eyelid surface. In another variant the eyelid handling type of a third handling type, and the eyelid is kept unchanged.

According to the present principles, the two embodiments are combined.

The present principles also relate to a device comprising a processor and a memory associated with the processor that is configured to implement the above method according to any one of the embodiments described herein.

The present principles also relate to a data stream carrying data representative of a 3D scene comprising one or more avatars having one or more eyes associated with an eyelid. The data comprise a scene description of the 3D scene that comprises a list of eyelid descriptions. Each eyelid description of the list comprises a reference to an eye node, a transform type for the eye node with associated transform parameters, and an eyelid handling type with associated handling parameters.

### 4. Brief Description of Drawings

The present disclosure will be better understood, and other specific features and advantages will emerge upon reading the following description, the description making reference to the annexed drawings wherein:
- **Figure 1** illustrates a base avatar in different configurations when morph targets are applied to it without and with the application of the present principles;
- **Figure 2** illustrate a first process to correctly locate and scale an eye;
- **Figure 3** shows an example architecture of a device which may be configured to implement eyes and eyelids correction in scene description methods according to embodiments of the present principles;
- **Figure 4** shows an example of an embodiment of the syntax of a stream when the data are transmitted over a packet-based transmission protocol;
- **Figure 5** diagrammatically shows a method for parsing a node with support of the MPEG_node_avatar extension according to the present principles;
- **Figure 6** diagrammatically shows a method for parsing of the AvatarEyelid property according to the present principles;
- **Figure 7** illustrates a third process to ensure that the eyelid is always in front of the eyes;
- **Figure 8** illustrates a fourth process to ensure that the eyelid is always on the contour of the eye and structure and shape of the eyelid are preserved.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

The present principles relate to avatar interoperability, where a user manages an avatar encoded into one or more files (for instance glTF). It is required that the avatar files contain everything an application needs to implement the expected features: the application must not have to provide extra data or make choices about possible setups. More precisely, the present principles concern avatar face animation, where face identity or expressions can be changed, and eyes can be animated. The avatar does not need to be a human being, other avatar types are supported, like real or fantasy animals, robots, vehicles, etc. The number of eyes is free and can be of any kind: they are not limited to two human eyes. In the following the word "eye" may be used for a light of a car for instance. According to the present principles, needed information is stored in the Scene Description part of the encoded 3D scene (that also comprises meshes, textures, scripts, ...). This information is transmitted to the renderer so it can ensure the following features: eyes are correctly located on the avatar when morph targets are applied; Eyes are always correctly scaled when morph targets are applied; For eyes inside sockets, eyes are well centered in the eye sockets when morph targets are applied; For eyes with eyelids, eyelids are in front of eyes when morph targets are applied; and for eyes with eyelids, eyelids are in front of eyes when eyes are animated.

According to the present principles, when the face of the avatar is changing, the eyes are adapted at a first step (the adaptation may be 'none') and the eyelids are adapted in a second step (the adaptation may be 'none'). Two examples of eyes correction are proposed (first and second processes) and two examples of eyelids correction are proposed (third and fourth processes). These lists are non-exhaustive.

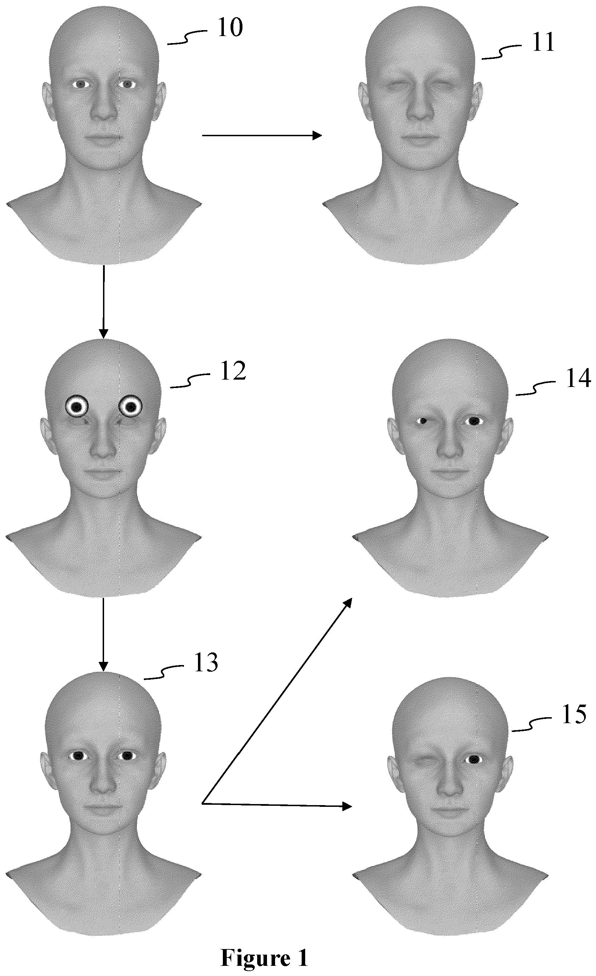

**Figure 1** illustrates a base avatar 10 in different configurations when morph targets are applied to it without and with the application of the present principles. Avatar 10 is the head of MORGAN MPEG avatar, version 2023, as defined in annex H of the text of ISO/IEC DIS 23090-14:2021(E) Information Technology - Coded representation of immersive media - Part 14: Scene Description for MPEG Media. In state 10, the head of the avatar is in a neutral state, without the use of dynamic features like morph targets. The eyelids are correctly overlapping the eyes, as expected in a properly designed avatar representation. In state 11, the head of the avatar is in a neutral state, except that a morph target was applied to close the eyes. As in state 10, the eyelids are correctly overlapping the eyes because the avatar is designed for it. In state 12, a morph target is applied to the head of the avatar to change the shape of the face (e.g. to make it more feminine or younger). Following the application of this morph target, the eye orbits should have been moved to a different location and made slightly smaller. Not adapting the eyeballs of neutral avatar 10 representation to the morph target results in the artifact visible in state 12. State 13 shows the head of avatar 10 with the same morph target but when the parameters obtained from the Scene Description are applied according to the present principles. The eyeballs are well located in the morphed face. In state 14, a morph target is applied to close the right eye of avatar 13. In this state, the eyelids do not overlap the eye. State 15 shows the head of avatar 13 with the same morph target but when the parameters obtained from the Scene Description are applied according to the present principles. The eyelids are corrected to ensure that they overlap the eye.

Four processes are proposed to ensure that eyes and related eyelids are correctly placed when the avatar shape is changed. Each eye is independently processed. These processes are applied after all transforms have been applied to the avatar (morph targets, skinning, etc.), and before the avatar is placed in a scene. As a result, it is assumed that the avatar is in a default location before running the proposed processes. The selected process for an eye and the related parameters are stored in the Scene Description, so the adaptation is independent of the rendering engine.

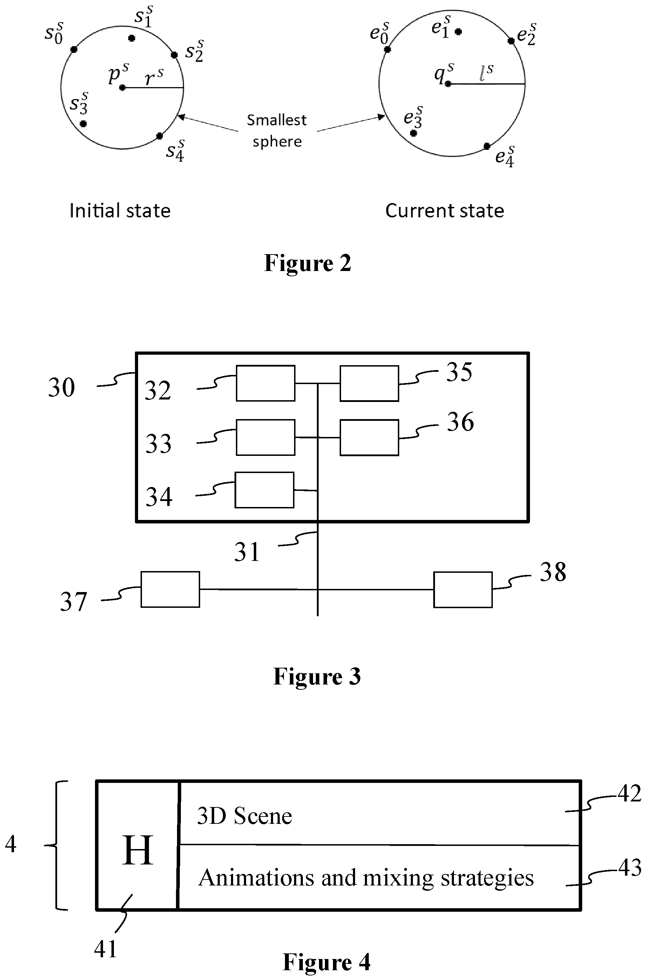

**Figure 2** illustrate a first process to correctly locate and scale an eye. The first process is an eye transform process. This first process may be selected when the shape of the eye is close to a sphere (like an eyeball), and that it is inside a cavity (like the eye socket). The first process is based on the computation of a corrective scale factor *c^{s}* and corrective translation *c^{t}* for the eye. Every time the avatar head changes (for instance, using morph target or skinning), the corrective scale factor is first computed and used to scale the eye. Then, the corrective translation is computed and used to translate the eye.

The computation of the corrective scale is based on two or more anchor vertices on the avatar. For instance, a vertex to the left of the eye socket and a vertex to the right of the eye socket can be chosen. These anchor vertices are identified by their index, denoted ${v}_{i}^{s}$ where 1 ≤ *i* < m and m > 0 is the number of anchor vertices. In an initial step, the XYZ coordinates of the anchor vertices are saved in some variable sf. Then, the smallest sphere of center *p^{s}* and radius *r^{s}* which includes all anchor vertices ${s}_{i}^{s}$ is computed. Every time the avatar head changes (for instance, using morph target or skinning), the XYZ coordinates ${e}_{i}^{s}$ of the anchor vertices are computed. Then, the smallest sphere of center *q^{s}* and radius *l^{s}* which includes all anchor vertices ${e}_{i}^{s}$ is computed. The corrective scale is then the ratio between the current and initial enclosing spheres: ${c}^{s} = \frac{{l}^{s}}{{r}^{s}} .$

The computation of the corrective translation is based on one or more anchor vertices on the avatar. For instance, a vertex deep in the eye socket can be chosen. These anchor vertices are identified by their index in the topology, denoted ${v}_{i}^{t}$ where 1 ≤ *i* < n and *n* > 0 is the number of anchor vertices. In an initial step, the XYZ coordinates of the anchor vertices are saved in some variable ${s}_{i}^{t}$. Every time the avatar head changes (for instance, using morph target or skinning), the XYZ coordinates ${e}_{i}^{t}$ of the anchor vertices are computed. Then, the corrective translation is the average of the differences between the current and initial coordinates is computed: *c^{t}* = $\frac{1}{n} {\sum }_{1}^{n} \left({e}_{i}^{t}-{s}_{i}^{t}\right)$.

The second process proposed herein consists in correctly locating and scaling the eye according to the weight of a morph target. The second process is an eye transform process. Every time a morph target is applied with a weight *w* ∈ [*wₘᵢₙ*, *wₘₐₓ*], an animation is run at time t *=* $\frac{w - {w}_{min}}{{w}_{max} - {w}_{min}} \left({t}_{max}-{t}_{min}\right) + {t}_{min}$, where animation time is in range [*tₘᵢₙ*, *tₘₐₓ*]. The animation must be designed such that, for each possible weight of the morph target, the eye is correctly transformed. For example, in Figure 1, when avatar 10 is morphed to became avatar 12, the correction according to the present principles leads to avatar 13. From the initial step (morph target weight *wₘᵢₙ* = 0) to the last step (morph target weight is *wₘₐₓ* = 1), the right eye socket is translated towards to the bottom and a little to the left. It is also reduced in volume. To ensure that the right eye is correctly located for every weight w of the morph target, an animation can be created from time *tₘᵢₙ* = 0 to time *tₘₐₓ* = 0, using translation and scale transforms on the right eye. A translation *tr*₀ = (0,0,0) and a first scale *sc*₀ = (1,1,1) are used in the animation for *t = tₘᵢₙ* (they do not change the eye). A translation *tr*₁ and scale *sc*₁ are setup for *t* = *tₘₐₓ* to ensure that the right eye is correct. Then, a linear interpolation is chosen for the animation so all transform and scale transforms are interpolated for *tₘᵢₙ* < *t* < *tₘₐₓ.* The animation is applied with *t = w* every time the weight w of the morph target changes. When several morph targets changes, and thus several animations need to be applied, animation mixing is required. Solutions exist for animation mixing.

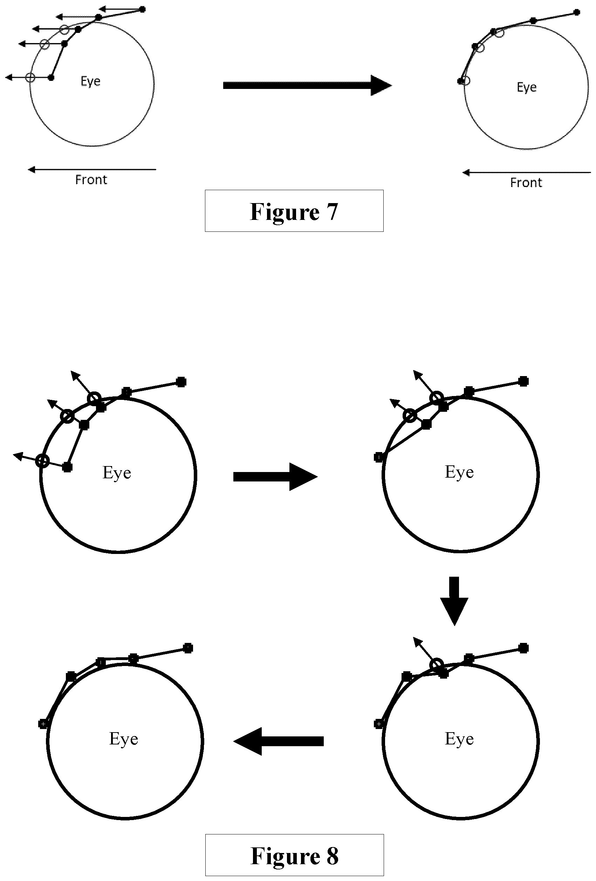

**Figure 7** illustrates a third process to ensure that the eyelid is always in front of the eyes. The third process is an eyelid transform process. It assumes that a front direction f is defined, and the eyelid vertices *vᵢ* are identified. In an initial step, the XYZ coordinates of the eyelid vertices *vᵢ* are saved in a variable *sᵢ*. Every time the avatar head changes (for instance, using morph target or skinning), the XYZ coordinates *eᵢ* of the eyelid vertices is the result of the avatar current transform applied on the initial coordinates *sᵢ* (in other words, coordinates *eᵢ* are the eyelid vertices "as if" no correction was made before). Then, the projection *pᵢ* of each point *eᵢ* on the eye following the front direction f is computed. First, if there is no eye point in front of *eᵢ*, values do not change. If there is a single point *pᵢ* in front of *eᵢ*, *pᵢ* is used in the following processing. If there is more than one point in front of *eᵢ*, the farthest one *pᵢ* from the eyelid is used in the following processing. If *pᵢ* exists, then the eyelid vertex is a little in front of the eye, e.g. *eᵢ* ← *pᵢ* + *αf*, where *α* > 0 is a number and *f* is a unit vector along the front direction of the eyelid vertex.

**Figure** 8 illustrates a fourth process to ensure that the eyelid is always on the contour of the eye and structure and shape of the eyelid are preserved. The fourth process is an eyelid transform process. In an initial step, the XYZ coordinates of the eyelid vertices *vᵢ* are saved in some variable *sᵢ*. Every time the avatar head changes (for instance, using morph target or skinning), the XYZ coordinates *eᵢ* of each vertex *vᵢ* are computed as the result *sᵢ* of the avatar current transform applied on the initial coordinates (in other words, coordinates *eᵢ* are the eyelid vertices "as if" no correction was made before). The outward normal of the surface of the eyelid *nᵢ* of each vertex *vᵢ* is also computed, using the coordinates *eᵢ*. Then, the projection *pᵢ* on the eye following the corresponding outward normal direction *nᵢ* of each point *eᵢ* is computed. If there is at least one point *pᵢ* ahead of *eᵢ* along the outward normal *nᵢ, i.e., pᵢ* is located towards the front of the face with respect to *eᵢ* on *nᵢ*, the farthest point *pᵢ* from the eye is moved slightly in front of the eye, e.g. *eᵢ* ← *pᵢ* + *αuᵢ*, where *α* > 0 is a pre-determined number and *uᵢ* is the normal vector on *nᵢ.* If there is no eye point ahead of *eᵢ* along the outward normal *nᵢ,*, the intersection between faces of the eyelid and eye are computed. If there is at least one face *fᵢ* which intersects the eye, the farthest one *fᵢ* from the eye is moved slightly in front of the eye, such as the distance between the eye and the face is a predetermined number *α* > 0. These steps are repeated until no eyelid vertex and face is inside the eye.

According to the present principles, the format of the Scene Description comprise, for each eye of an avatar, metadata indicating what process is to be applied to ensure a correct rendering of the eyes and eyelids and the associated parameters. The following example format follows the glTF format and is compatible with the recent MPEG-I SD standard. However, its meaning and use are generic and can be coded in other formats (XML, USD, AJIF, ...).

A list of "eyelids" information is added to the part of the format related to avatars. For example, the existing "MPEG_node_avatar" extension with a new list "eyelids".

| **Name** | **Type** | **Description** | **Required** |
|---|---|---|---|
| is Avatar | boolean | If true, this node contains the root of an avatar mesh. | Yes |
| type | string | The type of the Avatar representation is provided as a URN. | Yes |
| mappings | AvatarMapping [1-*] | The mapping between child nodes and semantics. | Yes |
| eyelids | AvatarEyelid [1-*] | Avatar eyelid definitions. | No |

Each item in the "eyelids" list defines the eyelid handling for each eye of the avatar.

AvatarEyelid is defined as follows:

| **Name** | **Type** | **Description** | **Required** |
|---|---|---|---|
| name | string | Eyelid name. | No |
| eyeNode | integer | Index of a glTF node (item in the "nodes" root list) with the eye mesh. | Yes |
| refNode | integer | Index of a glTF node (item in the "nodes" root list) with the reference mesh. | Yes |
| transform Type | string | Eye transform method, can be "none", "animation" or "simple". | Yes |
| if (transform Type == "animation") { | | | |
| animations | integer [1-*] | Indices of a glTF animations (items in the "animations" root list) with animations corresponding to each morph target of the reference mesh. Negative values are allowed, signaling that there is no animation for the corresponding morph target. | Yes |
| } else if (transform Type == "simple") { | | | |
| translationIndices | integer [1-*] | Indices of vertices in the reference mesh, to be used for computing a corrective translation. | Yes |
| scaleIndices | integer [2-*] | Indices of vertices in the reference mesh, to be used for computing a corrective scale. | No |
| } | | | |
| eyelidHandling | string | Eyelid handling method, can be "none" or "front". | Yes |
| if (eyelidHandling == "front") { | | | |
| eyelidIndices | integer | Index of a glTF accessor (item in the "accessors" root list) with the list of vertex indices in the reference mesh corresponding to the eyelid. | Yes |
| front | number [3] | A unit vector defining the eye front direction. | Yes |
| alpha | number | The amount of space to ensure between the eye and the eyelid. | Yes |
| } if (eyelidHandling == "normals") { | | | |
| eyelidIndices | integer | Index of a glTF accessor (item in the "accessors" root list) with the list of vertex indices in the reference mesh corresponding to the eyelid. | Yes |
| alpha | number | The amount of space to ensure between the eye and the eyelid. | Yes |
| } | | | |

The "eyeNode" property defines the node which contains the eye mesh. If this node has children, then the eye mesh is the concatenation of all meshes found in the node hierarchy, walked in a deep-first fashion. All mesh properties, like morph targets, are concatenated in this way. This node or at least one of its descendants must have a mesh.

The "refNode" property defines the node which contains the reference mesh. If this node has children, then the reference mesh is the concatenation of all meshes found in the node hierarchy, traversed in a deep-first fashion. All mesh properties, like morph targets, are concatenated in this way. This node or at least one of its descendants must have a mesh. The reference mesh can be, for instance, the head avatar or only the part around the eye.

The "transformType" property defines the transform method to use to correct the eye when the avatar changes. If "transformType" is "none", then no method is used to correct the eye.

If "transformType" is "simple", then the first process is used by the renderer. In this case property "translationIndices" is mandatory and contains the list of vertex indices to use for computing the corrective translation (denoted ${v}_{i}^{t}$ upper). The property "scaleIndices" property contains the list of vertex indices used for computing the corrective scale (denoted ${v}_{i}^{s}$ upper). If missing, the corrective scale is not computed and the eye is not rescaled.

If "transformType" is "animation", then the second process is used by the renderer. In this case property "animations" is mandatory and contains the list of animation indices to use for each morph targets. If an animation index is negative, there is no animation for the corresponding morph target.

The "eyelidHandling" defines the eyelid handling method to use. If "eyelidHandling" is "none", then there is no method to use for eyelid handling. If "eyelidHandling" is "front", then the third process is used by the renderer. The "eyelidIndices" property is mandatory and contains the index of an accessor with the list of vertex indices of the eyelid (denoted *vᵢ* upper). The "front" property is mandatory and contains the front vector (denoted f upper). The "alpha" property is mandatory and defines the minimum space between the eye and the eyelid (denoted *α* upper). If "eyelidHandling" is "normal", then the fourth process is used by the renderer. The "eyelidIndices" property is mandatory and contains the index of an accessor with the list of vertex indices of the eyelid (denoted *vᵢ* upper). The "alpha" property is mandatory and defines the minimum space between the eye and the eyelid (denoted *α* upper).

For the sake of clarity, the following example only show parts of the glTF file related to avatar eye handling.

| |
|---|
| ```
{
 "asset": {
  "generator": "Interdigital R&D France, Video Lab, Meta Video, Interactive Media, Immersive
  teleprescence",
  "version": "2.0"
 },
 "extensionsUsed": ["MPEG_node_avatar"],
 "buffers": [...],
 "bufferViews": [...],
 "accessors": [...],
 "animations": [...],
 "images": [...],
 "materials": [...],
 "meshes": [{
  "extras": {
   "targetNames":["Blendshape_AU43_Eyes_Closed_L",
   "Blendshape_AU43_Eyes_Closed_R","Blendshape_AU61_Eyes_turn_L",
   "Blendshape_AU61_Eyes_turn_R","Blendshape_AU63_eyeUp",
   "Blendshape_AU64_eyeDown", "Shape_1", "Shape_2"]
  },
  "name": "head",
  "primitives": [{
   "attributes": {
    "POSITION": 0,
    "TEXCOORD 0": 2
   },
   "indices": 1,
   "material": 0,
   "targets": [{
    "POSITION": 11
   }, {
    "POSITION": 12
   }, {
    "POSITION": 13
   }, {
    "POSITION": 14
   }, {
    "POSITION": 15
   }, {
    "POSITION": 16
   }, {
    "POSITION": 17
   }, {
``` |
| ```
    "POSITION": 18
   }]
  }],
  "weights": [0, 0, 0, 0, 0, 0, 0, 0]
 }, {
  "name": "eye_right",
  "primitives": [{
   "attributes": {
    "COLOR 0": 6,
    "POSITION": 3,
    "TEXCOORD_0": 5
   },
   "indices": 4,
   "material": 1
  }]
 }, {
  "name": "eye left",
  "primitives": [{
   "attributes": {
    "COLOR 0": 10,
    "POSITION": 7,
    "TEXCOORD_0": 9
   },
   "indices": 8,
   "material": 2
  }]
 }],
 "nodes": [{
  "children": [1,2,3],
  "extensions": {
   "MPEG node avatar": {
    "isAvatar": true,
    "type": "um:mpeg:sd:2023:avatar",
    "mappings": [{
      "node": 1,
      "path": "full_body/upper_body/head"
    }, {
      "node": 2,
      "path": "full_body/upper_body/head/eye_right"
    }, {
      "node": 3,
      "path": "full_body/upper_body/head/eye_left"
    }],
    "eyelids": [{
      "eyeNode": 2,
      "transformType": "simple",
``` |
| ```
      "translationVertices": [4179],
      "eyelidHandling": "front",
      "refNode": 1,
      "eyelidIndices": 25,
      "front": [0, 0, 1],
      "alpha": 0.1
    }, {
      "eyeNode": 3,
      "transformType": "simple",
      "translationVertices": [4179],
      "eyelidHandling": "front",
      "refNode": 1,
      "eyelidIndices": 26,
      "front": [0, 0, 1],
          "alpha": 0.1
    }]
   }
  }
 }, {
  "mesh": 0
 }, {
  "mesh": 1,
  "name": "eye right",
  "translation": [-2.5345743, 150.54233, 9.3114439]
 }, {
  "mesh": 2,
  "name": "eye left",
  "translation": [2.7856894, 150.54233, 9.3688351]
 }],
 "scene": 0,
 "scenes": [{
  "nodes": [0]
 }],
 "textures": [{
  "source": 0
 }, {
  "source": 1
 }, {
  "source": 2
  }]
 }
``` |

The glTF parser first loads are content except the one of the MPEG_node_avatar extension.

Then, it decodes the MPEG_node_avatar content found in the first node. It indicates that the node is an avatar ("isAvatar" is true), the type is the standard one ("type" is "urn:mpeg:sd:2023:avatar"), there are three parts: head, left and right eye ("mappings" property).

The eyelids handling is defined in the "eyelids" property of MPEG_node_avatar. There are two items in the "eyelids" list. The first item handles the right eye ("eyeNode" is 2). It can be transformed using the "simple" correction algorithm ("transformType" is "simple"). The vertex to use for translation is the one is index 4179 (e.g., ${v}_{0}^{t} = 4179$ and n = 1). There is no "scaleIndices" properties, meaning no scale correction is needed. The eyelid correction algorithm to use is the front one ("eyelidHandling" is "front"). This algorithm requires a reference mesh: in this example, this is the avatar head ("refNode" is 1). Within this mesh, the eyelid indices to modify are listed in accessor 25 ("eyelidIndices" is 25). The eyelid correction also needs the front direction, which is defined in the "front" property, with a value of [0, 0, 1]: the front direction is the Z axis. The alpha weight is 0.1 ("alpha" is 0.1).

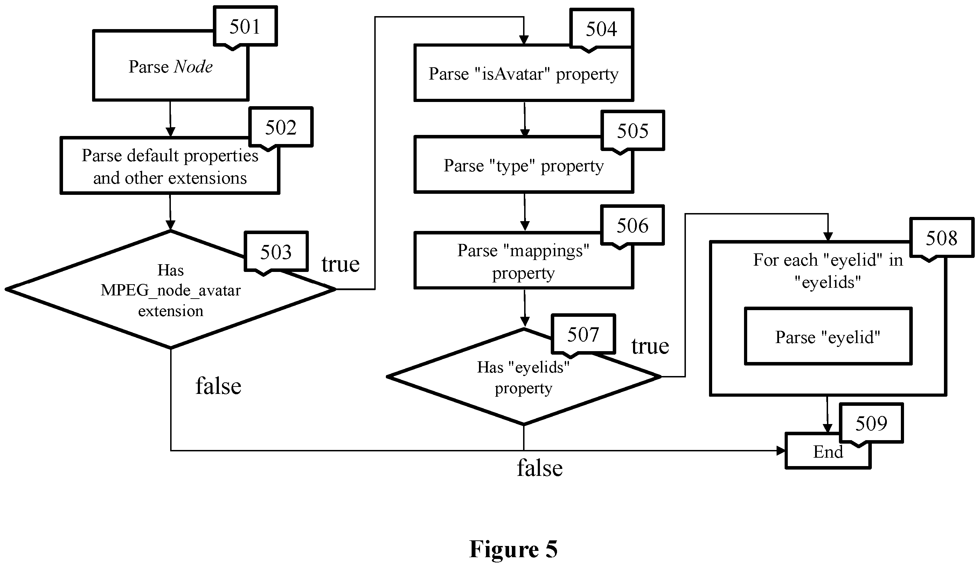

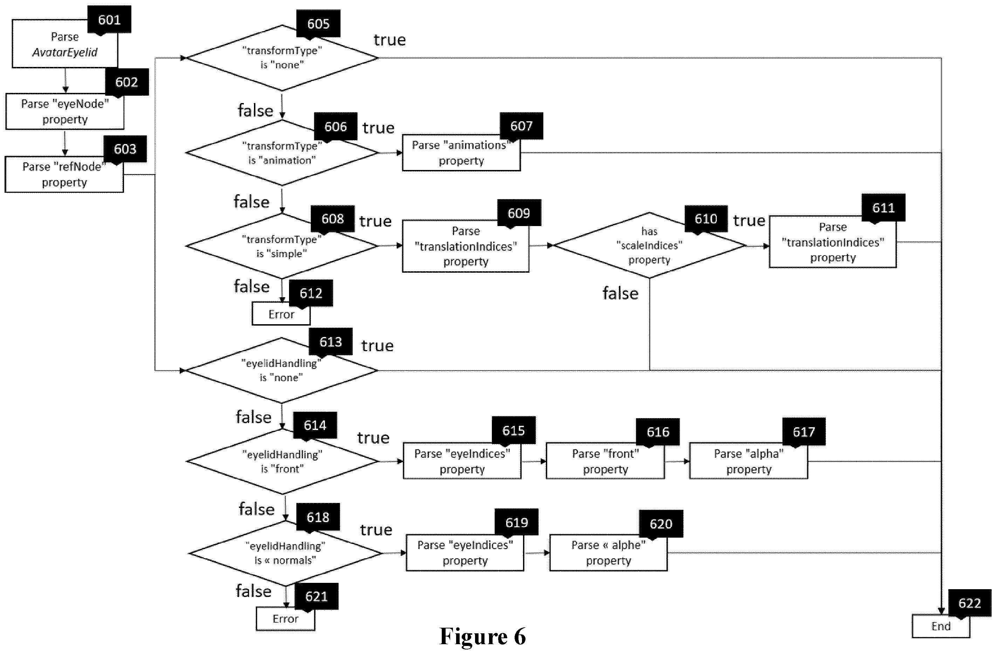

**Figure 5** diagrammatically shows a method for parsing a node with support of the MPEG_node_avatar extension according to the present principles. Step 501 starts every time a node is being processed in the glTF file. At step 502, the glTF loader decodes the standard properties and possible extensions. At step 503, if the MPEG_node_avatar is present, the loader parses it, otherwise parsing ends. At step 504, the "isAvatar" property is parsed (mandatory, error if not present). At step 505, the "type" property is parsed (mandatory, error if not present). At step 506, the "mappings" property is parsed (mandatory, error if not present). At step 507, the "eyelids" property is parsed (508) if present. Each item of this list is a AvatarEyeLid parsed according to the method of Figure 6. At step 509, the result of the data found in the MPEG_node_avatar extension (if any) is stored in a dedicated structure. This data can change the scene if the application or user chooses to use the features of one or more of the eyelids.

**Figure 6** diagrammatically shows a method for parsing of the AvatarEyelid property according to the present principles. Step 601 starts every time the glTF loader finds an AvatarEyelid property. At step 602, the "eyeNode" property is parsed: it must reference an existing glTF node. At step 603, the "refNode" property is parsed: it must reference an existing glTF node. At step 605, if "transformType" is "none", there is no corrective transform. At steps 606 and 607, if "transformType" is "animation", the corrective transform is the second process. The "animations" property contains the list of glTF animation indices (or a negative value) corresponding to the morph targets of the mesh(es) found in the reference node. The number of items in "animations" must be the same as the number of morph targets found in the reference node. Non-negative values in "animations" are animation indices and must correspond to an existing glTF animation. At steps 608, 609, 610 and 611, if "transformType" is "simple", the corrective transform is based on the first process. The "translationIndices" property contains the list of vertex indices to use for computing the corrective translation. Each value in this property must correspond to existing vertex indices found in reference node. If there is a "scaleIndices" property, a corrective scale is required, and needs the vertex indices in "scaleIndices" to be computed. Each value in this property must correspond to existing vertex indices found in reference node. At step 612, if "transformType" is not one of the expected values, an error is raised. At step 613, if "eyelidHandling" is "none", there is no processing to run for correcting the eyelids. At steps 614, 615, 616 and 617, if "eyelidHandling" is "front", the eyelid correction algorithm is the third process. The eyelid vertex indices are listed in the "eyelidIndices" property. Each value in this property must correspond to existing vertex indices found in reference node. The "front" property contains the front direction of the eye, and the "alpha" property contains the corrective factor. At steps 618, 619 and 620, if "eyelidHandling" is "normals", the eyelid correction algorithm is the third process. The eyelid vertex indices are listed in the "eyelidIndices" property. Each value in this property must correspond to existing vertex indices found in reference node. The "alpha" property contains the corrective factor. At step 621, if "eyelidHandling" is not one of the expected values, an error is raised. At step 622, AvatarEyelid parsing is over and successful.

**Figure 3** shows an example architecture of a device 30 which may be configured to implement eyes and eyelids correction in scene description methods according to embodiments of the present principles. The device is linked with other devices via their bus 31 and/or via I/O interface 36.

Device 30 comprises following elements that are linked together by a data and address bus 31:D
- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method according to the present principles of managing eyes and eyelids correction in scene description, and belongs to a set comprising:
- a mobile device;
- a communication device;
- a game device;
- a tablet (or tablet computer);
- a laptop;
- a still picture camera;
- a video camera.

**Figure 4** shows an example of an embodiment of the syntax of a stream when the data are transmitted over a packet-based transmission protocol. Figure 4 shows an example structure 4 of a stream encoding a 3D scene comprising animated objects according to the present principle. The structure consists in a container which organizes the stream in independent elements of syntax. The structure may comprise a header part 41 which is a set of data common to every syntax element of the stream. For example, the header part comprises some of metadata about syntax elements, describing the nature and the role of each of them. The structure comprises a payload comprising an element of syntax 42 and at least one element of syntax 43 (there may be an element of syntax 43 for each animation for example). Syntax element 42 comprises data representative of the 3D scene. It comprises a scene description and data necessary to render the objects of the 3D scene (e.g. meshes, textures, lighting, etc.). Element of syntax 43 is a part of the payload of the data stream and may comprise data encoding the animations of the objects of the scene (channels and samplers). According to the present principles, metadata comprising every information needed for managing eyes and eyelids of avatars are encoded, for example, in element of syntax 43. So, the data stream comprises data representative of a scene description, and data representative of two or more animations. Each animation comprises a one or more animation channels, and each channel targets one property of one node of a scene description. The data stream may also comprise data representative of a mixing strategy for one or more property kinds.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for rendering a 3D scene comprising one or more avatars having one or more eyes associated with an eyelid, the method comprising:
- obtaining a scene description of the 3D scene comprising a list of eyelid descriptions, wherein an eyelid description comprises:
• a reference to an eye node,
• a transform type for the eye node with associated transform parameters, and
• an eyelid handling type with associated handling parameters;
- preparing the 3D scene for rendering according to the scene description;
- for each eye node of the one or more avatars, if the avatar has changed, according to the eyelid description of the eye node:
• applying an eye transform process according to the transform type and transform parameters; and
• applying an eyelid transform process according to the eyelid handling type and handling parameters; and
- rendering the 3D scene.

2. The method of claim 1, wherein the transform type of an eyelid description is of a first transform type, and wherein the method comprises transforming the eye as a function of a corrective scale factor and corrective translation for the eye.

3. The method of claim 1, wherein the transform type of an eyelid description is of a second transform type and wherein the method comprises transforming the eye as a function of an animation based on a weight of a morph target.

4. The method of claim 1, wherein the transform type of an eyelid description is of a third transform type and wherein the eye is kept unchanged.

5. The method of one of claims 1 to 4, wherein the eyelid handling type of a first handling type, and wherein the method comprises transforming a mesh of the eyelid by moving vertices of the mesh in a front direction obtained described in the handling parameters.

6. The method of one of claims 1 to 4, wherein the eyelid handling type of a second handling type, and wherein the method comprises transforming a mesh of the eyelid by moving vertices of the mesh according to an outward normal of an eyelid surface.

7. The method of one of claims 1 to 4, wherein the eyelid handling type of a third handling type, and wherein the eyelid is kept unchanged.

8. A device for rendering a 3D scene comprising one or more avatars having one or more eyes associated with an eyelid, the device comprising a memory associated with a processor configured for:
- obtaining a scene description of the 3D scene comprising a list of eyelid descriptions, wherein an eyelid description comprises:
• a reference to an eye node,
• a transform type for the eye node with associated transform parameters, and
• an eyelid handling type with associated handling parameters;
- preparing the 3D scene for rendering according to the scene description;
- for each eye node of the one or more avatars, if the avatar has changed, according to the eyelid description of the eye node:
• applying an eye transform process according to the transform type and transform parameters; and
• applying an eyelid transform process according to the eyelid handling type and handling parameters; and
- rendering the 3D scene.

9. The device of claim 8, wherein the transform type of an eyelid description is of a first transform type, and wherein the method comprises transforming the eye as a function of a corrective scale factor and corrective translation for the eye.

10. The device of claim 8, wherein the transform type of an eyelid description is of a second transform type and wherein the method comprises transforming the eye as a function of an animation based on a weight of a morph target.

11. The device of claim 8, wherein the transform type of an eyelid description is of a third transform type and wherein the eye is kept unchanged.

12. The device of one of claims 8 to 11, wherein the eyelid handling type of a first handling type, and wherein the method comprises transforming a mesh of the eyelid by moving vertices of the mesh in a front direction obtained described in the handling parameters.

13. The device of one of claims 8 to 11, wherein the eyelid handling type of a second handling type, and wherein the method comprises transforming a mesh of the eyelid by moving vertices of the mesh according to an outward normal of an eyelid surface.

14. The device of one of claims 8 to 11, wherein the eyelid handling type of a third handling type, and wherein the eyelid is kept unchanged.

15. A data stream carrying data representative of a 3D scene comprising one or more avatars having one or more eyes associated with an eyelid, the data comprising a scene description of the 3D scene comprising a list of eyelid descriptions, wherein an eyelid description comprises:
- a reference to an eye node,
- a transform type for the eye node with associated transform parameters, and
- an eyelid handling type with associated handling parameters.
